(19) Europäisches Patentamt / European Patent Office / Office européen des brevets

(11) **EP 3 320 331 B1**

(12) **FASCICULE DE BREVET EUROPEEN**

(45) Date de publication et mention
de la délivrance du brevet:
**20.10.2021 Bulletin 2021/42**

(21) Numéro de dépôt: **16747830.4**

(22) Date de dépôt: **07.07.2016**

(51) Int Cl.:
***G01N 23/087*** *(2018.01)*

(86) Numéro de dépôt international:
**PCT/FR2016/051720**

(87) Numéro de publication internationale:
**WO 2017/006059 (12.01.2017 Gazette 2017/02)**

(54) **PROCÉDÉ D'IDENTIFICATION D'UN MATÉRIAU**

MATERIALIDENTIFIKATIONSVERFAHREN

MATERIAL IDENTIFICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2015 FR 1556461**

(43) Date de publication de la demande:
**16.05.2018 Bulletin 2018/20**

(73) Titulaire: **Commissariat à l'énergie atomique et aux énergies alternatives
75015 Paris (FR)**

(72) Inventeur: **PAULUS, Caroline
38000 Grenoble (FR)**

(74) Mandataire: **INNOV-GROUP
310, avenue Berthelot
69372 Lyon Cedex 08 (FR)**

(56) Documents cités:
**WO-A1-94/28442     US-A- 6 118 850
US-B1- 6 266 390**

- **WANG XIAOLAN ET AL: "Material separation in x-ray CT with energy resolved photon-counting detectors", MEDICAL PHYSICS, AIP, MELVILLE, NY, US, vol. 38, no. 3, 24 February 2011 (2011-02-24), pages 1534-1546, XP012145145, ISSN: 0094-2405, DOI: 10.1118/1.3553401**
- **ALESSIO ADAM M ET AL: "Quantitative material characterization from multi-energy photon counting CT", MEDICAL PHYSICS, AIP, MELVILLE, NY, US, vol. 40, no. 3, 28 February 2013 (2013-02-28), pages 31108-31108, XP012171013, ISSN: 0094-2405, DOI: 10.1118/1.4790692 [retrieved on 2013-02-28]**

**Description**

## DOMAINE TECHNIQUE

Le domaine technique de l'invention est l'identification d'un matériau par irradiation à l'aide d'un rayonnement électromagnétique ionisant, suivie d'une analyse spectrométrique du rayonnement transmis par le matériau irradié. Plus précisément, l'invention est un procédé d'analyse mettant en œuvre une combinaison de données spectrométriques mesurées, suivie d'une projection des données combinées à l'aide de vecteurs de projections préalablement déterminés.

## ART ANTERIEUR

La détermination de la nature de matériaux par irradiation à l'aide de rayons X est une technique usuelle, pratiquée depuis des décennies. On ne compte pas le nombre de systèmes industriels basés sur l'irradiation d'un objet par rayonnement X, et analyse du rayonnement transmis par l'objet, ce dernier étant interposé entre une source de rayons X et un détecteur. De tels systèmes sont utilisés quotidiennement, par exemple dans le contrôle de bagages d'aéroports.

Initialement destinées à discriminer des matériaux denses, par exemple des métaux, ces technologies ont progressé et ont permis d'identifier des matériaux légers, susceptibles de présenter un risque. Un progrès notable a été la mise en œuvre de détecteurs spectrométriques, permettant l'acquisition de spectres exploitables, tout en étant exposés à des flux importants.

Par exemple, le brevet EP2510338 décrit un procédé permettant de déterminer la nature d'un matériau, et de son épaisseur, sur la base d'un spectre d'un rayonnement X transmis par ledit matériau. Des coefficients $(\alpha_1....\alpha_n)$, dits coefficients d'atténuation ou de transmission, sont calculés sur la base du spectre. On dispose également d'une base de données de calibration, réalisée sur différents échantillons de calibration, la nature et l'épaisseur de chaque échantillon de calibration étant connues. Pour un matériau de même nature, on dispose de plusieurs échantillons de calibration d'épaisseurs différentes. Ainsi, chaque échantillon de calibration correspond à un couple (nature du matériau ; épaisseur), auquel on associe des coefficients $(\alpha_1^{u,v}, ...\alpha_n^{u,v})$, les exposants $u$ et $v$ désignant respectivement la nature du matériau constituant l'échantillon de calibration ainsi que son épaisseur.

A partir des coefficients $(\alpha_1....\alpha_n)$ issus d'un spectre du rayonnement transmis par un matériau inconnu, on identifie, dans la base de données, l'échantillon de calibration (matériau $u$-épaisseur v) dont les coefficients d'atténuation $(\alpha_1^{u,v}, ...\alpha_n^{u,v})$ sont les plus proches des coefficients mesurés $(\alpha_1....\alpha_n)$. La nature du matériau constituant l'objet, ainsi que son épaisseur, sont alors considérés comme étant ceux correspondant à l'échantillon de calibration présentant les coefficients les plus proches de l'objet.

Plus récemment, le document WO2015091083 décrit un procédé permettant d'estimer le numéro atomique effectif $Z_{eff}$ d'un matériau. Par numéro atomique effectif, on entend une combinaison des numéros atomiques des éléments chimiques constituant le matériau. La combinaison prend notamment la forme d'une somme pondérée, en affectant le numéro atomique de chaque élément chimique d'un coefficient de pondération dépendant de la fraction massique ou atomique dudit élément chimique dans le matériau. Ainsi, si chaque élément chimique constituant le matériau est indicé par l'indice k, une définition possible de $Z_{eff}$ peut être :

$$Z_{eff} = \left( \sum_{k=1}^{K} \eta_k \left( Z_{eff}^k \right)^z \right)^{1/z}$$

avec :

> $\eta_k$ : fraction massique de l'élément chimique k dans le matériau ;
> $K$ : nombre d'éléments chimiques dans le matériau ;
> z : constante égale à 4,62.

Une telle estimation peut être établie, en appliquant une fonction de vraisemblance au spectre du rayonnement X transmis par le matériau analysé. La fonction de vraisemblance est préalablement établie, à l'aide de mesures de calibration, mettant en oeuvre des matériaux de calibration, dont le numéro atomique et l'épaisseur sont connus. Le numéro atomique effectif du matériau analysé peut notamment être obtenu en mettant en oeuvre un algorithme de type maximum de vraisemblance, le numéro atomique effectif et l'épaisseur étant ceux maximisant la fonction de vraisemblance. En outre, les documents WANG XIAOLAN ET AL: "Material séparation in x-ray CT with energy resolved photon-counting detectors", MEDICAL PHYSICS, vol. 38, no. 3, 24 février 2011, pages 1534-1546, XP012145145, DOI:10.1118/1.3553401 et

ALESSIO ADAM M ET AL: "Quantitative material characterization from multi-energy photon counting CT",MEDICAL PHYSICS, vol. 40, no. 3, 28 février 2013, pages 31108-31108, XP012171013, DOI:10.1118/1.4790692 divulguent aussi des procédés similaires.

Les inventeurs ont cherché à perfectionner les méthodes précédemment décrites, en proposant une évaluation plus précise de la nature du matériau, permettant d'établir une estimation de la nature du matériau, indépendamment de son épaisseur.

## EXPOSE DE L'INVENTION

Un objet de l'invention est un procédé de classification d'un matériau comprenant les étapes suivantes :

i) irradiation d'un échantillon, comportant ledit matériau, à l'aide d'un rayonnement ionisant électromagnétique, dit rayonnement incident, produit par une source d'irradiation ;

ii) détection d'un rayonnement transmis par ledit échantillon à l'aide d'un détecteur spectrométrique, ledit échantillon étant disposé entre ladite source d'irradiation et ledit détecteur, et acquisition d'un spectre du rayonnement ainsi détecté, dit spectre de transmission, représentatif de la distribution en énergie dudit rayonnement transmis, le spectre comportant un nombre de canaux et représentant une quantité de photons détectés par canal, chaque canal correspondant à une plage d'énergie ;

iii) détermination d'un ensemble de paramètres à partir du spectre de transmission, cet ensemble de paramètres formant les coordonnées d'un vecteur de paramètres, représentant ledit spectre de transmission, dans un espace de départ le nombre de paramètres de l'ensemble de paramètres étant strictement inférieur au nombre de canaux du spectre de transmission ;

iv) projection dudit vecteur de paramètres selon au moins un vecteur de projection, de façon à obtenir au moins une donnée projetée, chaque donnée projetée résultant de la projection dudit vecteur de paramètres selon un vecteur de projection ;

v) classification du matériau en fonction de chaque donnée projetée, le procédé étant tel que chaque vecteur de projection est déterminé au cours d'une phase d'apprentissage, réalisée à l'aide de matériaux de calibration dont la nature est connue, lesdits matériaux de calibration définissant au moins deux classes distinctes de matériaux, ladite phase d'apprentissage comprenant :

- l'obtention de spectres de calibration, chaque spectre de calibration étant représentatif de la distribution en énergie d'un rayonnement transmis par un matériau de calibration lorsque ledit matériau de calibration est disposé entre ladite source d'irradiation et ledit détecteur spectrométrique ;
- la détermination d'un ensemble de paramètres de calibration à partir de chaque spectre de calibration, cet ensemble de paramètres formant les coordonnées d'un vecteur de calibration, de façon à obtenir une pluralité de vecteurs de calibration correspondant à chaque classe ;
- au moins un vecteur de projection étant déterminé en calculant, et en particulier en maximisant, à partir de chaque vecteur de calibration, un critère discriminant, déterminé par une comparaison entre :

  - un premier terme représentatif d'une dispersion inter-classes ;
  - un deuxième terme, représentatif d'une dispersion intra-classe.

Selon un mode de réalisation, on dispose d'une pluralité de vecteurs de projection, l'étape iv) permettant d'obtenir une pluralité de données projetées, chaque donnée projetée résultant de la projection du vecteur de paramètre selon un vecteur de projection.

On peut notamment disposer d'un nombre prédéterminé de classes de matériaux, l'étape v) consistant à classifier le matériau selon une desdites classes de matériau. Une classe de matériaux peut correspondre à un matériau particulier ou à un groupe de matériaux.

L'étape iv) peut comporter la projection dudit vecteur de paramètres dans un espace d'arrivée, chaque vecteur de projection formant alors une base, dite base d'arrivée, dudit espace d'arrivée. Le nombre de vecteurs formant ladite base d'arrivée peut notamment être strictement inférieur au nombre de classes de matériaux.

Selon un mode de réalisation, le spectre de transmission est normalisé, terme à terme, par un spectre du rayonnement incident, ce dernier étant représentatif de la distribution en énergie dudit rayonnement incident.

Le spectre de transmission comporte N canaux, le nombre P de paramètres de l'ensemble de paramètres étant strictement inférieur à N, et de préférence inférieur à N/2 voire à N/4. Typiquement, le nombre P de paramètres est inférieur à 50, voire inférieur à 30, voire inférieur à 20. P peut par exemple être compris entre 2 et 20.

Selon un mode de réalisation, le spectre de transmission est défini sur une pluralité de canaux, et au moins un paramètre correspond :

- une référence du canal du spectre de transmission comportant le nombre maximal de photons détectés ;
- ou un ratio entre les contenus de deux canaux différents ;
- ou un taux de variation entre les contenus de deux canaux différents ;

Au moins un vecteur de projection peut être obtenu en déterminant, à partir de chaque vecteur de calibration,

- une première matrice représentative d'une dispersion inter-classes des vecteurs de calibration,
- une deuxième matrice, représentative d'une dispersion intra-classe des vecteurs de calibration,
- une troisième matrice, formée par un produit matriciel d'une matrice inverse de ladite deuxième matrice par ladite première matrice.

De préférence, chaque vecteur de projection est déterminé par analyse discriminante linéaire, effectuée en considérant chaque vecteur de calibration. Un vecteur de projection peut être un vecteur propre de ladite troisième matrice. L'analyse discriminante linéaire permet d'obtenir une discrimination optimale des données projetées, selon les différentes classes considérées.

Un autre objet de l'invention est un dispositif de caractérisation du matériau contenu dans un échantillon comprenant :

- une source d'irradiation, apte à émettre un rayonnement électromagnétique ionisant, dit rayonnement incident, vers ledit échantillon,
- un détecteur spectrométrique, apte à détecter un rayonnement transmis par l'échantillon lorsque l'échantillon, exposé audit rayonnement incident, est interposé entre la source d'irradiation et le détecteur spectrométrique,
- le dispositif étant caractérisé en ce qu'il comporte un processeur, apte à recevoir des données mesurées par le détecteur spectrométrique et configuré pour mettre en œuvre le procédé décrit ci-dessus et dans la suite de la description, le processeur étant relié à une mémoire dans laquelle est stockée au moins un vecteur de projection.

Un autre objet de l'invention est un support d'enregistrement d'informations, lisible par ordinateur, comportant des instructions pour l'exécution d'un procédé décrit ci-dessus et dans la suite de la description.

FIGURES

La figure 1 représente un mode de réalisation d'un dispositif permettant la mise en œuvre d'un procédé selon l'invention.

La figure 2 représente des spectres du rayonnement transmis par un matériau en polyéthylène, pour différentes épaisseurs k, respectivement égales à 2 cm, 4 cm, 8 cm et 12 cm. L'axe des abscisses correspond à la référence de chaque canal du spectre, tandis que l'axe des ordonnées représente le nombre de photons détectés par canal.

La figure 3 représente les principales étapes d'un procédé selon l'invention.

La figure 4 représente les spectres de transmission de différents matériaux de nature j et de différentes épaisseurs k. Sur chacune de ces figures, l'axe des abscisses correspond à la référence de chaque canal du spectre, tandis que l'axe des ordonnées « Nb Photons » représente le nombre de photons détectés par canal.

La figure 5 représente deux populations appartenant à deux classes différentes $C_1$ et $C_2$, ainsi que deux axes FA et PA adaptés à la classification de ces populations selon l'une de ces classes.

La figure 6 représente des points, chaque point représentant un spectre de calibration associé à matériau de calibration, dans un plan défini par deux vecteurs de projection $w_1$ et $w_2$.

La figure 7 représente des points, chaque point représentant un spectre de test associé à un matériau de test, dans un plan défini par deux vecteurs de projection $w_1$ et $w_2$.

La figure 8 représente des points correspondant à des spectres de test, dans un plan défini par deux axes. L'axe des abscisses représente une estimation du numéro atomique effectif et l'axe des ordonnées représente une estimation d'une longueur équivalente de polyéthylène, multipliée par la densité du polyéthylène.

**EXPOSE DE MODES DE REALISATION PARTICULIERS**

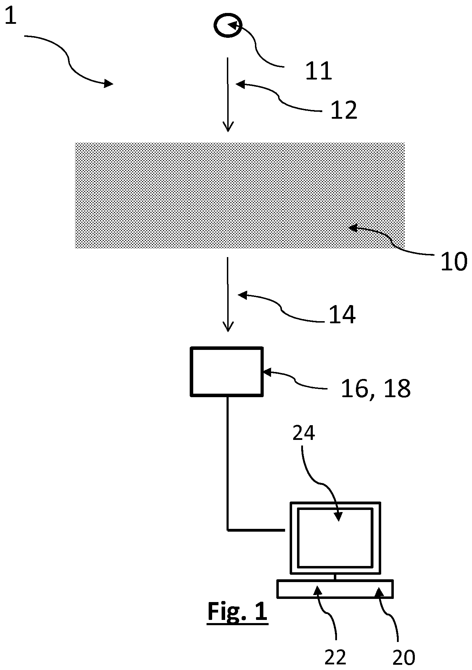

La figure 1 représente un mode de réalisation d'un dispositif 1 mettant en œuvre un procédé selon l'invention.

Une source d'irradiation 11 émet un rayonnement électromagnétique ionisant 12, dit rayonnement incident, vers un échantillon 10 comportant un matériau à identifier. Le terme rayonnement électromagnétique ionisant désigne un rayonnement électromagnétique d'énergie supérieur à 1 keV, et de préférence inférieur à 100 MeV. La plage d'énergie du rayonnement ionisant peut être comprise entre 1 keV et 5 MeV, mais elle s'étend le plus souvent entre 1keV et 150 keV ou 300 keV. Le rayonnement ionisant peut être un rayonnement X ou γ. De préférence, la source de rayonnement ionisant est polyénergétique, le rayonnement incident étant émis selon une plage d'énergie s'étendant généralement selon plusieurs dizaines voire centaines de keV . Il s'agit notamment d'un tube émetteur de rayons X.

L'épaisseur de l'échantillon 10 est comprise entre quelques mm et quelques cm, voire dizaines de cm. Elle est typiquement inférieure à 30 cm, voire 50 cm.

L'échantillon 10 transmet une partie du rayonnement incident 12 vers un détecteur spectrométrique 16. En effet, le rayonnement incident peut subir, dans l'échantillon, différentes interactions, par exemple un effet photoélectrique, une diffusion inélastique Compton, voire un effet de création de paires lorsque l'énergie du rayonnement incident le permet.

Aussi, sous l'effet de l'irradiation par le rayonnement incident 12, l'échantillon transmet un rayonnement 14, dit rayonnement transmis, vers un détecteur spectrométrique 16. Le détecteur spectrométrique 16 est apte détecter le rayonnement transmis 14 et à former un spectre en énergie du rayonnement 14 ainsi détecté.

Le rayonnement transmis 14 comporte une pluralité de photons X dont l'énergie est comprise entre une énergie minimale $E_{min}$ et une énergie maximale $E_{max}$. Le détecteur 16 détecte des photons constituant ce rayonnement et génère, à chaque photon détecté, une impulsion électronique dont l'amplitude dépend de l'énergie du photon. Plus précisément, l'amplitude est proportionnelle à l'énergie perdue par le photon dans le détecteur, cette dernière dépendant de l'énergie de ce photon. Ce détecteur 16 comprend un circuit électronique de spectrométrie 18, apte à enregistrer l'amplitude de chaque impulsion générée durant une période d'acquisition T, et à établir un histogramme de l'amplitude des impulsions formées durant cette période d'acquisition. On obtient alors un spectre d'amplitude, ou spectre d'énergie $Sp$, représentatif de la distribution en énergie du rayonnement transmis 14. Une relation entre l'amplitude A et l'énergie E peut être obtenue par une fonction d'étalonnage en énergie $f$ telle que $E = f(A)$, selon des principes connus de l'homme du métier.

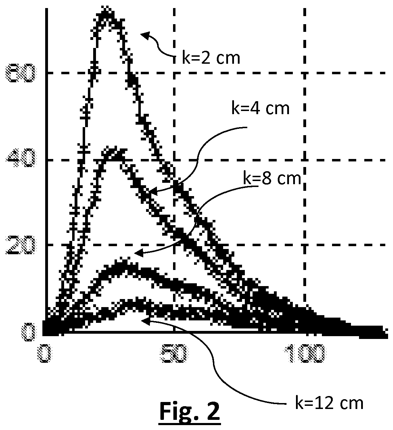

Un tel spectre $Sp$ est représenté sur la figure 2, qui représente un spectre du rayonnement 14 transmis par des échantillons de polyéthylène, dont l'épaisseur k varie entre 2 cm et 12 cm. L'axe des abscisses correspond à l'amplitude A (ou à l'énergie E = f(A)), discrétisée en une pluralité de canaux d'amplitude, tandis que l'axe des ordonnées représentent le contenu de chaque canal, c'est-à-dire le nombre d'impulsions détectées, ou le nombre d'impulsions détectées par unité de temps. Ainsi, un spectre en énergie représente, pour une pluralité de canaux, un nombre de photons détectés par canal, chaque canal correspondant à une plage d'énergie. Chaque canal peut être identifié par un indice n tel que $1 \leq n \leq N$, le nombre de canaux N étant supérieur ou égal à 2. A chaque canal $E_n$ est attribué le nombre d'impulsions $Sp(E_n)$ dont l'énergie est comprise dans la plage $E_n$ et $E_n + \Delta E_n$. Pour tout n compris entre 1 et N-1, $E_n \leq E_{n+1}$.

Il est fréquent de normaliser, terme à terme, le spectre en énergie du rayonnement 14 transmis par l'échantillon 10 par un spectre $Sp_0$ établi sans échantillon 10 interposé entre la source 11 et le détecteur 16. Le spectre $S\rho_0$ est représentatif de la distribution en énergie des photons constituant le rayonnement incident 12. On obtient alors une fonction spectrale de transmission TR, telle que, pour chaque canal d'énergie $E_n$,

$$TR(E_n) = \frac{Sp(E_n)}{Sp_0(E_n)}$$

Il est alors possible de déterminer une fonction spectrale d'atténuation $Att$ de l'échantillon 10, telle que pour chaque canal d'énergie $E_n$, $Att(E_n) = -ln\ [TR(E_n)]$.

Dans la suite de la description, on décrit un procédé dont la donnée d'entrée est le spectre $Sp$ du rayonnement transmis par le matériau, dit spectre de transmission, sachant que ce procédé s'applique à toute fonction spectrale mettant en œuvre ce spectre, et en particulier aux fonctions spectrales de transmission ou d'atténuation telles que précédemment définies.

Un processeur 20, par exemple un microprocesseur, est apte à traiter chaque spectre de transmission mesuré par le détecteur spectrométrique 16. En particulier, le processeur est un microprocesseur relié à une mémoire programmable 22 dans laquelle est stockée une séquence d'instructions pour effectuer les opérations de traitement de spectres et de calculs décrites dans cette description. Ces instructions peuvent être sauvegardées sur un support d'enregistrement, lisible par le processeur, de type disque dur, CDROM ou autre type de mémoire. Le processeur peut être relié à une unité d'affichage 24, par exemple un écran.

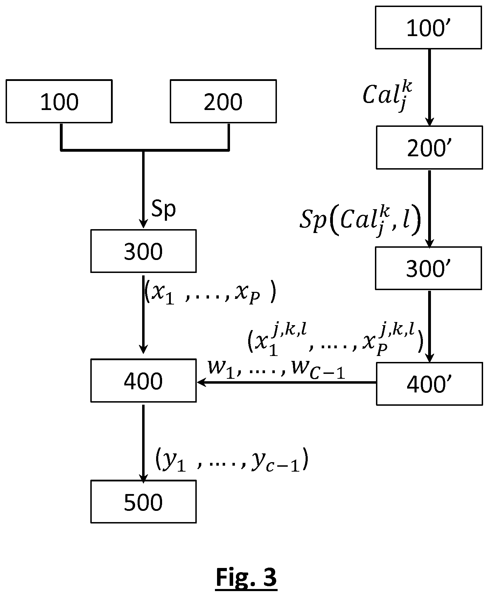

En lien avec la figure 3, on va à présent décrire les principales étapes d'un mode de réalisation d'un procédé selon l'invention.

La première étape 100 est une étape d'irradiation de l'échantillon à l'aide du tube générateur de photons X.

La deuxième étape 200 est une étape d'acquisition, consistant à acquérir, au moyen du détecteur spectrométrique 16, un spectre de transmission Sp d'un échantillon 10, comportant un matériau dont on souhaite déterminer la nature. Cette étape est mise en œuvre simultanément à la première étape 100. Ce spectre Sp est porteur d'une information quant à la nature du matériau examiné, mais cette information est disséminée sur les N canaux d'énergie $E_1...E_n...E_N$ selon lesquels le spectre est défini. Ce nombre N est supérieur ou égal à 2, mais est généralement supérieur à 10, voire supérieur à 100. Dans l'exemple considéré, N = 130.

Les inventeurs ont estimé qu'il était préférable de concentrer l'information en réduisant le nombre de variables, de façon à ce qu'un spectre de transmission Sp puisse être représenté par un nombre P de paramètres ($x_1$ ,..., $x_P$ ), avec, de préférence, $2 \leq P \leq 20$, et P < N.

Aussi, au cours d'une troisième étape 300 de réduction du nombre de variables, ou réduction de la dimensionnalité, on détermine à partir du spectre de transmission $Sp$, P paramètres ($x_1$ ,..., $x_P$) représentatifs de ce spectre. Dans cet exemple :

- le premier paramètre $x_1$ correspond à l'indice du canal rassemblant le plus grand nombre d'impulsions. Ainsi,

$$x_1 = \underset{n}{\mathrm{argmax}}(Sp(E_n))$$

- le deuxième paramètre $x_2$ correspond à un ratio entre l'intégrale des canaux s'étendant selon une plage spectrale $[x_1-\delta, x_1+\delta]$, de demi largeur $\delta$, de part et d'autre du canal référencé par le premier paramètre $x_1$, sur l'intégrale du spectre, avec, dans cet exemple, $\delta = 10$.

Ainsi, $$x_2 = \frac{\sum_{n=x1-\delta}^{n=x1+\delta} Sp(En)}{\sum_{n=1}^{n=N} Sp(En)} = \frac{\sum_{n=x1-10}^{n=x1+10} Sp(En)}{\sum_{n=1}^{n=N} Sp(En)}$$

- le troisième paramètre $x_3$ correspond à un ratio entre le contenu des canaux localisés entre deux canaux d'indice respectifs r et r + s, sur l'intégrale du spectre. Par exemple, r = s = 30, ainsi :

$$x_3 = \frac{\sum_{n=r}^{n=r+s} Sp(En)}{\sum_{n=1}^{n=N} Sp(En)} = \frac{\sum_{n=30}^{n=60} Sp(En)}{\sum_{n=1}^{n=N} Sp(En)}$$

- le quatrième paramètre $x_4$ correspond à un ratio entre le contenu de canaux dans une plage de basse énergie, c'est-à-dire rassemblant des canaux d'indices faibles, et le contenu de canaux dans une plage de haute énergie, c'est-à-dire rassemblant des canaux d'indices plus élevés. La plage d'indices faibles s'étend entre les indices $n_{inf1}$ et $n_{inf2}$, tandis que la plage d'indices élevés s'étend entre $n_{sup1}$ et $n_{sup2}$, avec $n_{sup2} > n_{inf2}$ et de préférence $n_{inf2} \leq n_{sup1}$. Par exemple, $n_{inf1}$, $n_{inf2}$, $n_{sup1}$ et $n_{sup2}$ sont respectivement égaux à 1, 30, 50 et 130, on a :

$$x_4 = \frac{\sum_{n=ninf1}^{n=ninf2} Sp(En)}{\sum_{n=nsup1}^{n=nsup2} Sp(En)} = \frac{\sum_{n=1}^{n=30} Sp(En)}{\sum_{n=50}^{n=130} Sp(En)}$$

- Les cinquième, sixième et septième paramètres sont des taux de variation entre deux canaux différents, respectivement situés dans une plage d'indice faible $[m_{inf1}, m_{inf2}]$, dans une plage d'énergie moyenne $[m_{ave1}, m_{ave2}]$ et dans une plage d'énergie élevée $[m_{sup1}, m_{sup2}]$, avec $m_{inf2} < m_{ave2} < m_{sup\,2}$ et de préférence $m_{inf2} \leq m_{ave1}$ et/ou $m_{ave2} \leq m_{sup1}$. Par exemple, $m_{inf1}$, $m_{inf2}$, $m_{ave1}$, $m_{ave2}$, $m_{sup1}$, $n_{sup2}$ sont respectivement égaux à 1, 40, 40, 80, 80, 120, de telle sorte que

$$x_5 = \frac{Sp(E_{n=minf2}) - Sp(E_{n=minf1})}{m_{inf2} - m_{inf1}} = \frac{Sp(E_{n=40}) - Sp(E_{n=1})}{39}$$

$$x_6 = \frac{Sp(E_{n=mave2}) - Sp(E_{n=mave1})}{m_{ave2} - m_{ave1}} = \frac{Sp(E_{n=80}) - Sp(E_{n=40})}{40}$$

$$x_7 = \frac{Sp(E_{n=msup2}) - Sp(E_{n=msup1})}{m_{sup2} - m_{sup1}} = \frac{Sp(E_{n=120}) - Sp(E_{n=80})}{40}$$

Par taux de variation, on entend un ratio entre une différence des contenus de deux canaux sur une différence de l'indice de ces deux canaux.

- Le huitième paramètre $x_8$ correspond à une estimation du numéro atomique effectif $Z_{eff}$ du matériau. Une telle estimation peut être établie, à partir du spectre de transmission Sp, selon un procédé décrit dans la demande de brevet WO2015091083 préalablement mentionnée en tant qu'art antérieur, et en particulier entre les pages 16 et 19 de cette demande. Comme indiqué en liaison avec la description de l'art antérieur, le numéro atomique effectif correspond à une combinaison, notamment sur la base d'une somme pondérée, des numéros atomiques des différents éléments chimiques constituant un matériau, les termes de pondération étant les fractions massiques ou atomiques de chaque élément chimique. La méthode décrite dans la demande WO2015091083 vise à établir une fonction de vraisemblance au cours d'une phase de calibration, et d'estimer la valeur du numéro atomique effectif maximisant cette fonction de vraisemblance.

- Selon une variante, on utilise un neuvième paramètre $x_9$ représentant l'épaisseur $EP_{ref}$ dans un matériau de référence, multipliée par la densité de ce matériau de référence. La demande de brevet FR 15 55438, déposée le 15/06/2015, décrit comment, à partir d'un spectre de transmission Sp, on peut considérer que le matériau examiné est équivalent à deux épaisseurs ($EP_1$, $EP_2$), dites épaisseurs équivalentes, de deux matériaux de référence ($Ref_1$, $Ref_2$). Cette demande de brevet décrit l'établissement d'une fonction de vraisemblance, lors d'une phase de calibration, basée sur des matériaux de référence connus, et de différentes épaisseurs. Cette fonction de vraisemblance est ensuite mise en œuvre pour déterminer les épaisseurs équivalentes dans lesdits matériaux de référence, à partir du spectre de transmission Sp d'un échantillon examiné, en particulier selon un critère de maximum de vraisemblance. Un de ces matériaux de référence peut être le polyéthylène PE, auquel cas le neuvième paramètre $x_9$ correspond à l'épaisseur équivalente de polyéthylène $EP_{PE}$, déterminée en mettant en œuvre une méthode telle que décrite dans cette demande de brevet, multipliée par la densité du polyéthylène $\rho_{PE}$. Ainsi, $x_9 = EP_{PE} \times \rho_{PE}$. Ce neuvième paramètre est optionnel.

Ces 9 paramètres définissent un point M, représentatif du spectre de transmission Sp, dans un espace $\xi$ dit espace de départ. La base B de cet espace de départ $\xi$ est formée par des vecteurs de base ($v_1....v_P$) respectivement associés à chaque paramètre, de telle sorte que la projection du point M sur chacun de ces vecteurs de base correspond à la valeur du paramètre auquel ce vecteur de base est associé. Autrement dit, les paramètres ($x_1 ,..., x_P$) représentent les coordonnées point M dans l'espace de départ $\xi$. Elles correspondent également aux coordonnées d'un vecteur $V_M$, associé au point M, de dimension (P, 1) et comprenant les coordonnées ($x_1 ,..., x_P$) du point M. Ce vecteur $V_M$ est appelé vecteur de paramètres, car il rassemble des paramètres représentatifs du spectre de transmission Sp.

La quatrième étape 400 est une étape de projection, au cours de laquelle le vecteur de paramètres $V_M$ est projeté selon au moins un vecteur de projection $w_i$, de façon à permettre une classification de ce point dans une classe représentant un matériau donné. Cela correspond également à une projection du point M selon ledit vecteur de projection.

Plus précisément, un objectif du procédé est de déterminer la nature d'un matériau en le classant dans une classe de matériaux prédéterminée. On dispose alors d'un nombre C de classes $C_j$, avec $1 \leq j \leq C$, chaque classe correspondant à un matériau, et le procédé permet d'identifier la classe à laquelle le matériau examiné appartient. On a préalablement déterminé un nombre W de vecteurs de projection $w_1...w_i...w_W$, chaque vecteur de projection étant de dimension (P,1), de façon à projeter le vecteur de paramètres $V_M$ selon chacun de ces vecteurs de projection. Ces vecteurs de projection sont définis lors d'une phase de calibration de la méthode décrite par la suite, en lien avec les étapes 100' à 400' représentées sur la figure 3. Ils définissent une base d'un espace d'arrivée $\xi'$. Ces vecteurs de projection sont stockés dans une mémoire 22 reliée au processeur 20.

La projection selon chacun des vecteurs de projection revient à déterminer les coordonnées ($y_1,....,y_W$) du vecteur de paramètres $V_M$ dans l'espace d'arrivée $\xi'$, ces coordonnées permettant une classification du point dans l'une des C classes de matériaux. Chaque coordonnée $y_w$, avec $1 \leq w \leq W$, représente un paramètre de classification. Par paramètre de classification, on entend un paramètre sur la base duquel s'effectue la classification.

On observe que le rayonnement transmis 14 est tout d'abord représenté :

- par un spectre de transmission Sp, de dimension (N,1),
- puis par un vecteur de paramètres $V_M$, $\xi$ de dimensions (P,1), représentant les coordonnées ($x_1 ,..., x_P$) d'un point M, représentatif du spectre Sp, dans l'espace de départ $\xi$, avec P $\leq$N ;
- puis par un vecteur de paramètres $V_M$, $\xi'$ de dimension (W, 1) représentant les coordonnées ($y_1 ,....,y_W$) dudit point M dans l'espace d'arrivée $\xi'$, de dimension W, cet espace étant associé à une base B' définie par les W vecteurs de projection $(w_1...w_i...w_w)$. Les coordonnées $(y_1,....,y_w)$ constituent alors les paramètres de classification.

Le nombre W de vecteurs de projection est inférieur ou égal à P. De préférence, le nombre W de vecteurs de projection est égal au nombre C de classes moins un, mais il peut également être inférieur. Aussi, de préférence, W = C-1, mais on peut également avoir W $\leq$C-1. Dans cet exemple, on considère que W = C-1.

La cinquième étape 500 est une étape de classification, permettant d'attribuer une classe $C_j$ au matériau analysé, cette classe étant représentative de la nature de ce matériau, ou d'un groupe de matériaux. Elle est déterminée en fonction des paramètres de classification $(y_1, ... , y_W)$, constituant les coordonnées du vecteur de paramètres $V_M, _{\xi'}$ dans l'espace d'arrivée $\xi'$.

Cette étape est classique, et revient à identifier, dans l'espace d'arrivée $\xi'$, la classe à laquelle appartient le vecteur de paramètres $V_M, _{\xi'}$ représentant le spectre *Sp* dans cet espace. La nature du matériau analysé est alors considérée comme étant celle du matériau associé à cette classe. L'identification de la classe la plus proche peut être réalisée en calculant une distance entre le vecteur de paramètres et un vecteur représentant le centre de chaque classe, cette distance pouvant être pondérée par un terme de dispersion propre à chaque classe. Ce type d'opération est bien connu de l'homme du métier.

Dans cet exemple, le nombre de classe C est égal à 6, chaque classe $C_j$, $1 \leq j \leq 6$ représentant respectivement le TNT (acronyme de Trinitrotoluène), le Polyéthylène, le PMMA (Poiyméthacryiate de méthyle), le PTFE (Polytétrafluoroéthylène), l'eau et le Nylon.

L'étape 400 de projection nécessite l'utilisation d'au moins un vecteur de projection $w_i$, ou d'un ensemble de vecteurs de projection $(w_1...w_i...w_w)$.

Ces vecteurs de projection sont définis lors d'une phase d'apprentissage, réalisée préalablement à la projection, et comportant les étapes 100' à 400', représentées sur la figure 3, et décrites ci-dessous.

La première étape 100' de la phase d'apprentissage vise à déterminer une pluralité d'échantillons de calibration, dont la nature est connue et est représentative des matériaux que l'on souhaite identifier par la suite. Dans cet exemple, on a utilisé 24 échantillons de calibration $Cal_j^k$, chaque échantillon de calibration $Cal_j^k$ étant de nature j, correspondant à une classe $C_j$, et d'épaisseur k, cette dernière étant exprimée en cm.

Dans cet exemple, on dispose de :

- quatre échantillons de calibration $Cal_1^{k=2}$, $Cal_1^{k=4}$, $Cal_1^{k=8}$, $Cal_1^{k=12}$ de TNT, correspondant à la classe $C_1$;

- quatre échantillons de calibration $Cal_2^{k=2}$, $Cal_2^{k=4}$, $Cal_2^{k=8}$, $Cal_2^{k=12}$ de Polyéthylène, correspondant à la classe $C_2$;

- quatre échantillons de calibration $Cal_3^{k=2}$, $Cal_3^{k=4}$, $Cal_3^{k=8}$, $Cal_3^{k=12}$ de PMMA, correspondant à la classe $C_3$;

- quatre échantillons de calibration $Cal_4^{k=2}$, $Cal_4^{k=4}$, $Cal_4^{k=8}$, $Cal_4^{k=12}$ de PTFE, correspondant à la classe $C_4$;

- quatre échantillons de calibration $Cal_5^{k=2}$, $Cal_5^{k=4}$, $Cal_5^{k=8}$, $Cal_5^{k=12}$ d'eau, correspondant à la classe $C_5$;

- quatre échantillons de calibration $Cal_6^{k=2}$, $Cal_6^{k=4}$, $Cal_6^{k=8}$, $Cal_6^{k=12}$ de nylon, correspondant à la classe $C_6$.

La deuxième étape 200' de la phase d'apprentissage est une étape de détermination d'une pluralité de spectres de calibration, par exemple 20 spectres de calibration $Sp(Cal_j^k, l)$, pour chaque échantillon de calibration $Cal_j^k$. Chaque spectre de calibration $Sp(Cal_j^k, l)$ correspond à la réalisation *l* d'un spectre de calibration relatif à l'échantillon de calibration $Cal_j^k$ de nature *j* et d'épaisseur *k*. *l* est un entier supérieur ou égal à 1. Dans cet exemple, $1 \leq l \leq 20$.

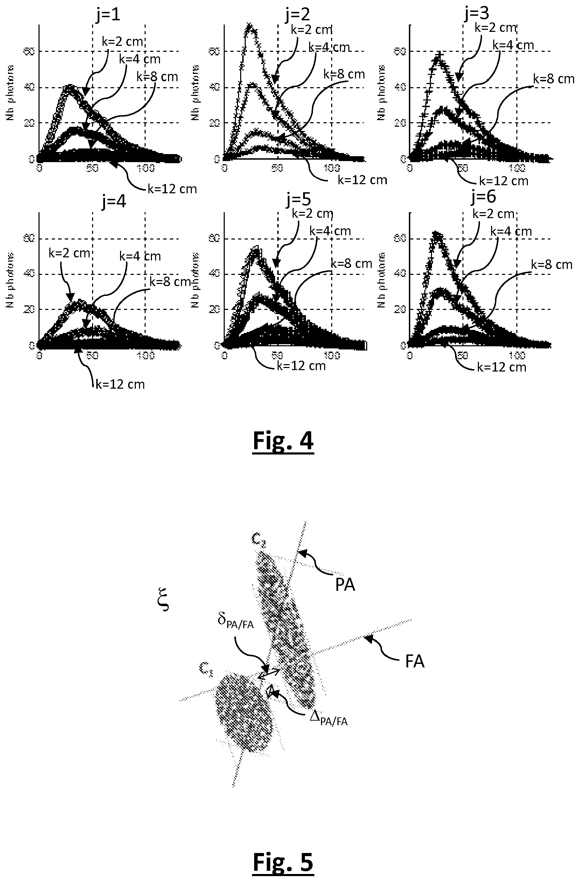

Ces spectres de calibration peuvent être réalisés expérimentalement ou simulés à l'aide d'un code de calcul, par exemple sur un code de calcul statistique basé sur une méthode de type Monte Carlo ou autre code connu de l'homme du métier. Dans le cas d'une simulation, chaque spectre de calibration est affecté d'un bruit, pouvant être modélisé par un bruit Poissonnien. La figure 4 représente des exemples de spectres de calibration, obtenus pour différents échantillons de calibration, de différentes épaisseurs k, correspondant respectivement aux classes j=1, j=2, j=3, j=4, j=5 et j=6.

Dans cet exemple, chaque classe est associée à un matériau particulier. Il est cependant possible qu'une classe soit associée à un mélange de matériaux, ou à des matériaux d'un même groupe, par exemple des matériaux considérés comme inoffensifs, ou potentiellement dangereux, ou encore très dangereux.

La troisième étape 300' de la phase d'apprentissage est une étape de réduction du nombre de variables, ou réduction de dimensionnalité, dans laquelle on détermine, à partir de chaque spectre de calibration $Sp(Cal_j^k, l)$, P paramètres de calibration $(x_1^{j,k,l}, \ldots, x_P^{j,k,l})$ représentatifs de ce spectre. On comprend que ces paramètres sont identiques à ceux décrits en lien avec l'étape 300. Ainsi, chaque spectre de calibration $Sp(Cal_j^k, l)$ peut être représenté, par un point $M(Cal_j^k, l)$, dont les coordonnées sont $(x_1^{j,k,l}, \ldots, x_P^{j,k,l})$, ces coordonnées constituant également les termes d'un vecteur de calibration $V_M(Cal_j^k, l)$.

La quatrième étape 400' consiste à déterminer $W$ vecteurs de projection $w_1, \ldots, w_w$, avec $W \leq$ C-1, permettant d'obtenir une classification optimale de chaque spectre de calibration $Sp(Cal_j^k, l)$. Par classification optimale, on entend qu'un nombre maximal de spectres de calibration $Sp(Cal_j^k, l)$ sont classés dans la classe $C_j$ correspondant à la nature j de l'échantillon de calibration.

Ces vecteurs de projection peuvent être obtenus par une technique d'analyse discriminante prédictive, connue sous l'acronyme LDA (Linear Discrimination Analysis, signifiant analyse discriminante linéaire), cette méthode conférant un pouvoir discriminant particulièrement intéressant par rapport à d'autres techniques de réduction de la dimensionnalité, par exemple la décomposition en composantes principales (ou PCA : Principal Component Analysis).

Appliquée à deux classes, la classification par LDA revient à déterminer un axe, dit axe discriminant de Fisher, permettant une séparation entre les populations appartenant à deux classes. La figure 5 est un exemple représentant deux classes $C_1$ et $C_2$, représentées dans un espace de départ $\xi$ en deux dimensions. Chaque classe comprend une population représentée par des points, formant deux ensembles ovoïdes. On a également représenté l'axe principal PA, déterminé par PCA, ainsi que l'axe discriminant de Fisher FA, déterminé par LDA. Lorsque la population de chaque classe est projetée sur l'axe principal PA, on observe une plage de recouvrement $\Delta_{PA/FA}$, dans laquelle certains points des classes $C_1$ et $C_2$ se superposent après projection. Cette projection ne permet donc pas une séparation nette entre les deux classes. A l'inverse, lorsque la population de chaque classe est projetée sur l'axe discriminant de Fisher FA, les points projetés de chaque classe ne se recouvrent pas et sont distants d'une distance $\delta_{PA/FA}$ non nulle, attestant d'une séparation correcte entre les deux classes. Dans cet exemple, l'espace d'arrivée $\xi'$, de dimension 1, correspond à l'axe FA.

D'une façon générale, la classification par LDA est basée sur un critère discriminant, déterminé par une comparaison, généralement prenant la forme d'un ratio, entre :

- un premier terme, représentatif d'une dispersion inter-classes,
- et un deuxième terme, représentatif d'une dispersion intra-classe.

Ce critère peut être un critère discriminant dit de Fisher, tel que défini ci-après.

Un tel critère discriminant permet de définir un vecteur de projection, définissant un axe discriminant, de telle sorte que les données projetées selon cet axe sont utilisées en tant que paramètres de classification.

Les dispersions inter-classes ou intra-classe évoquées ci-dessus sont déterminées à l'aide des vecteurs de calibration $V_M(Cal_j^k, l)$ associés à des matériaux de calibration $Cal_j^k$ de classes j différentes.

Soit $m_j$, le vecteur de dimension (P,1), représentant la moyenne des vecteurs de calibration $V_M(Cal_j^k, l)$ associé à une même classe $C_j$. Le vecteur $m_j$ est tel que pour tout entier p tel que $1 \leq p \leq P$, $m_j(p) = \underset{k,l}{\mathrm{mean}}\left[V_M(Cal_j^k, l)(p)\right]$. On peut définir une matrice de dispersion inter-classes $\Sigma_{inter}$, de dimension C x C, telle que :

$$\Sigma_{inter} = \frac{1}{C}\sum_{j=1}^{C}(m_j - m)(m_j - m)^T$$

$m$ désignant le vecteur moyen des vecteurs moyens $m_j$ associés à chaque classe j, de telle sorte que

$m = \underset{j}{\mathrm{mean}}\left[m_j\right]$, l'opérateur mean désignant la moyenne arithmétique, l'exposant $T$ désignant l'opérateur transposée.

On définit également une matrice de dispersion intraclasse $\Sigma_{intra}$, de dimension (P,P) telle que

$$\Sigma_{intra} = \sum_{j=1}^{c} S_j$$

Avec, pour chaque classe j,

$$S_j = \sum_{k,l} \left( V_M\left(Cal_j^k, l\right) - m_j \right) \left( V_M\left(Cal_j^k, l\right) - m_j \right)^T$$

Les vecteurs de projections recherchés, de dimension (P,1), sont ceux maximisant le critère de Fisher *J(w)*, précédemment évoqué, tel que

$$J(w) = \frac{w^T \Sigma_{inter} w}{w^T \Sigma_{intra} w}$$

Les vecteurs w solutions correspondent aux vecteurs propres d'une matrice $\Sigma$ de dimension (P,P) telle que

$$\Sigma = \Sigma_{intra}^{-1} \times \Sigma_{inter}$$

On détermine alors un ensemble $w_1, \dots, w_W$ de W de vecteurs de projection $w_i$, avec $1 \leq i \leq W$, et $W \leq C-1$. Dans cet exemple, W = C-1, si bien qu'on détermine un ensemble de vecteurs de projection $w_1, \dots, w_{c-1}$

Le vecteur de projection $w_1$ peut être le vecteur propre associé à la valeur propre dont la valeur absolue est la plus élevée, les vecteurs $w_i$ d'indices moins élevés étant respectivement associés aux valeurs propres dont la valeur absolue est de moins en moins élevée. Autrement dit, chaque vecteur de projection $w_i$ est tel que la valeur propre qui lui est associée présente une valeur absolue supérieure à celle associée au vecteur de projection $w_{i+1}$, avec $1 \leq i \leq W-1$.

Les vecteurs de projection définis lors de l'étape 400' sont stockés dans la mémoire 22, pour être utilisés lors de l'étape de projection 400 lors de la détermination d'un matériau inconnu.

Cette étape de détermination des vecteurs de projection $w_1, \dots, w_W$ nécessite l'inversion de la matrice $\Sigma_{intra}$. L'étape 300' de réduction de dimensionnalité est importante lorsque le nombre N de canaux des spectres de calibration est supérieur à 10 ou 20, ce qui est généralement le cas. En effet, si la matrice $\Sigma_{intra}$ était déterminée directement à partir des spectres de calibration $\left(Cal_j^k, l\right)$, de dimension (N, 1), elle ne serait probablement pas inversible, du fait de la valeur trop élevée de N. L'étape 300' permet alors d'utiliser un nombre réduit de P paramètres. La réduction de dimensionnalité permet donc la définition des vecteurs de projection $w_i$.

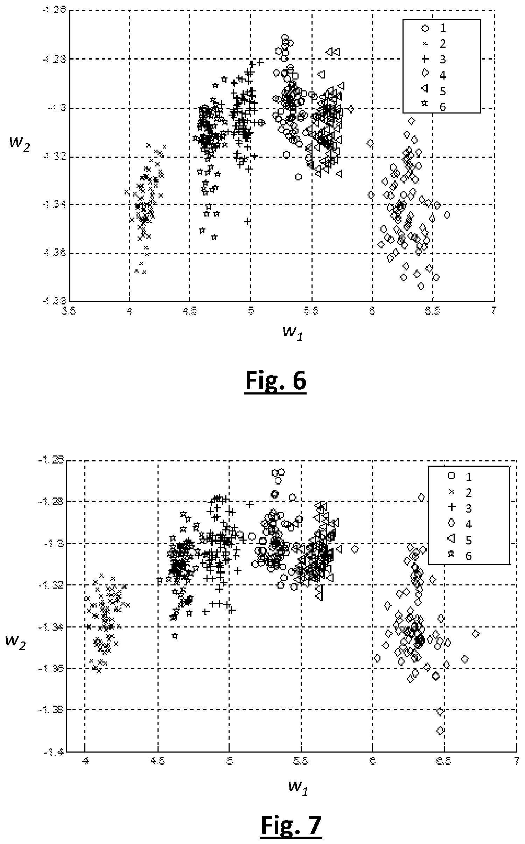

Afin de tester la pertinence des vecteurs de projection déterminés suite à l'étape 400', un premier essai a été réalisé en projetant les spectres de calibration $Sp\left(Cal_j^k, l\right)$ établis lors de l'étape 200'. Au cours de ce premier essai, on effectue les étapes 200 à 400 préalablement décrites, en se basant sur ces spectres de calibration. La figure 6 représente chaque point $M\left(Cal_j^k, l\right)$, représentatif d'un spectre de calibration, dans un plan défini par les deux premiers vecteurs de projection $w_1$ et $w_2$. On observe tout d'abord que chaque point $M\left(Cal_j^k, l\right)$ d'une même classe de matériau j est regroupé avec les autres points de la même classe, correspondant à une épaisseur k et/ou une réalisation l différente. Ainsi, chaque classe $C_j$ apparaît bien regroupée.

Soit $y_{1,j}^k$, la coordonnée du point $M\left(Cal_j^k, l\right)$ selon l'axe $w_1$, c'est-à-dire la projection de $M\left(Cal_j^k, l\right)$ selon cet axe. On observe que les coordonnées $y_{1,j}^k$ permettent une séparation correcte de chaque classe, les points associés aux classes j = 1, j = 2, j = 3, j = 4, j = 5 et j = 6 étant respectivement projetés dans les plages valeurs : [5.1 - 5.5] ; [4-4.4] ;

[4.8 - 5.1] ; [6 - 6.5] ; [5.5 - 5.8] ; [4.5-4.8].

Ainsi, selon cet exemple, une seule projection, selon un seul vecteur de projection, en l'occurrence $w_1$ peut permettre d'effectuer une classification correcte.

Un résultat remarquable est que la classification est robuste vis-à-vis de l'épaisseur k du matériau

Un deuxième essai a été réalisé, en simulant des spectres de test $\mathrm{Sp}(Test_j^k)$, chaque spectre correspondant à un matériau de nature j et d'épaisseur k. Ces spectres de test sont simulés. On considère que chaque simulation correspond à une réalisation de l'étape 200 d'acquisition d'un spectre.

Pour chaque spectre de test $\mathrm{Sp}(Test_j^k)$, on met en œuvre les étapes 300 et 400 préalablement décrites, l'étape 400 permettant d'obtenir les coordonnées $(y_1, \dots, y_{c-1})$ représentant chaque spectre selon les vecteurs de projection $w_1, \dots, w_{c-1}$ obtenus à l'aide des spectres de calibration.

La figure 7 représente chaque point $\mathrm{M}(Test_j^k)$, représentatif de chaque spectre $\mathrm{Sp}(Test_j^k)$, dans un plan défini par les vecteurs de projection $w_1$, $w_2$. On observe à nouveau que chaque spectre est correctement classé. On remarque que la projection selon le premier vecteur de projection $w_1$, permettant de déterminer un paramètre de classification $y_{1,j}^k$, permet une classification plus fiable qu'une projection selon le deuxième vecteur de projection $w_2$, donnant lieu à un paramètre de classification $y_{2,j}^k$.

Les spectres de test $\mathrm{Sp}(Test_j^k)$ ont par ailleurs été traités à l'aide des méthodes, préalablement évoquées, respectivement décrites dans les demandes de brevet WO2015091083 et FR1555438 précédemment évoquées. Ainsi, on a obtenu une estimation du numéro atomique effectif $Z_{eff}$ et une estimation de l'épaisseur équivalente $L_{PE}$ dans un matériau de référence de type Polyéthylène.

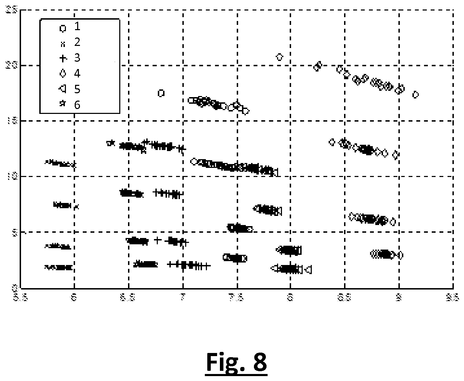

La figure 8 représente des points représentatifs de chacun de ces spectres dans un plan dont l'axe des abscisses représente l'estimation du numéro atomique effectif Zeff et dont l'axe des ordonnées représente l'épaisseur équivalente $L_{PE}$ de Polyéthylène multipliée par la densité du Polyéthylène.

On observe que la classification sur la base de l'estimation du numéro atomique effectif permet une estimation correcte de la nature j du matériau, tandis que la classification selon l'épaisseur équivalente $L_{PE}$ de Polyéthylène permet une segmentation des matériaux selon leur épaisseur k.

On a comparé la performance de la classification réalisée, sur la base des spectres de tests $\mathrm{Sp}(Test_j^k)$, respectivement selon l'estimation du numéro atomique effectif $Z_{eff}$ et selon un procédé de classification selon l'invention, en mettant en œuvre 5 vecteurs de projection $w_1, \dots, w_5$.

La performance de chaque classification est estimée en calculant un indicateur $DP_{j,j'}$, représentant le pouvoir discriminant d'une méthode pour discriminer deux classes différentes j et j'.

Le pouvoir discriminant de chaque paramètre de classification Z est défini par l'expression :

$$DP\,(Z)_{j,j'} = \frac{\bigl(mean\,(z_j) - mean\,(z_{j'})\bigr)}{\sigma_{zj}^2 - \sigma_{zj'}^2},$$

avec :

- *mean* ($Z_j$) et *mean* ($Z_j$) : moyennes des paramètres de classification Z obtenus en mettant en œuvre des matériaux respectivement de classe j et j' ;
- $\sigma_{zj}^2$ et $\sigma_{zj'}^2$ : variances des paramètres de classification Z obtenus en mettant en œuvre des matériaux respectivement de classe j et j'.

Plus ce pouvoir discriminant *DP* $(Z)_{j,j'}$ est élevé, mieux le paramètre de classification Z permet de discriminer deux classes j et j'.

Le tableau 1 représente le pouvoir discriminant *DP* $(Z)_{j,j'}$, avec Z = $Z_{eff}$, le paramètre de classification étant alors l'estimation du numéro atomique effectif Zeff.

Le tableau 2 représente le pouvoir discriminant *DP* $(Z)_{j,j'}$ avec $Z = \sum_{i=1}^{5} y_i$, chaque terme $y_i$ étant déterminé

par la projection d'un vecteur de paramètres d'un spectre test $V_M(Test_j^k)$ selon un vecteur de projection $w_i$ tel que précédemment décrit.

Tableau 1

| j \ j' | 1 | 2 | 3 | 4 | 5 | 6 |
|--------|---|------|------|-------|-------|-------|
| 1 | X | 87.7 | 6.5 | 30.8 | 5.0 | 22.7 |
| 2 | X | 0 | 65.7 | 204.5 | 155.9 | 44.1 |
| 3 | X | 0 | 0 | 67.7 | 26.1 | 5.9 |
| 4 | X | 0 | 0 | 0 | 13.3 | 107.9 |
| 5 | X | 0 | 0 | 0 | 0 | 57.9 |
| 6 | X | 0 | 0 | 0 | 0 | 0 |

Tableau 2

| j \ j' | 1 | 2 | 3 | 4 | 5 | 6 |
|--------|---|-------|------|-------|-------|-------|
| 1 | X | 144.0 | 14.4 | 49.3 | 8.8 | 45.4 |
| 2 | X | X | 79.5 | 251.4 | 251.2 | 42.7 |
| 3 | X | X | X | 100.3 | 50.2 | 9.1 |
| 4 | X | X | X | X | 26.7 | 149.7 |
| 5 | X | X | X | X | X | 110.0 |
| 6 | X | X | X | X | X | X |

Les pouvoirs discriminants reportés dans le tableau 2 sont en moyenne 1.6 fois plus élevés que ceux reportés dans le tableau 1.

Ainsi, l'invention permet de réaliser une classification plus fiable.

L'invention pourra être mise en œuvre dans le domaine du contrôle non destructif de matériaux, en particulier le contrôle de bagages.

**Revendications**

1.  Procédé de classification d'un matériau comprenant les étapes suivantes :

    i) irradiation d'un échantillon (10) comportant ledit matériau à l'aide d'un rayonnement ionisant électromagnétique (12), dit rayonnement incident, produit par une source d'irradiation (11) ;
    ii) détection d'un rayonnement transmis (14) par l'échantillon à l'aide d'un détecteur spectrométrique (16), ledit échantillon (10) étant disposé entre ladite source d'irradiation (11) et ledit détecteur spectrométrique (16), et acquisition d'un spectre (Sp) du rayonnement ainsi détecté, dit spectre de transmission, représentatif de la distribution en énergie dudit rayonnement transmis (14), le spectre comportant un nombre de canaux (N), et représentant une quantité de photons détectés par canal, chaque canal correspondant à une plage d'énergie ;
    iii) détermination d'un ensemble de paramètres $(x_1, ..., x_P)$ à partir du spectre de transmission (Sp), cet ensemble de paramètres formant les coordonnées d'un vecteur de paramètres $(V_M)$, représentant ledit spectre de transmission (Sp), dans un espace de départ $(\xi)$, le nombre de paramètres (P) de l'ensemble de paramètres étant strictement inférieur au nombre de canaux (N) du spectre de transmission ;
    iv) projection dudit vecteur de paramètres $(V_M)$ selon au moins un vecteur de projection $(w_1, ..., w_W)$, de façon à obtenir au moins une donnée projetée $(y_1, ..., y_W)$, chaque donnée projetée résultant de la projection dudit vecteur de paramètres $(V_M)$ selon un vecteur de projection ;
    v) classification du matériau en fonction de chaque donnée projetée $(y_1, ..., y_W)$, le procédé étant **caractérisé en ce que** chaque vecteur de projection $(w_i)$ est déterminé au cours d'une phase d'apprentissage, réalisée à l'aide de matériaux de calibration $(Cal_j^k)$ dont la nature (j) est connue, lesdits matériaux de calibration définissant au moins deux classes distinctes ($C_j$) de matériaux, ladite phase d'apprentissage comprenant :

- l'obtention de spectres de calibration $(Sp(Cal_j^k, l))$, chaque spectre de calibration étant représentatif de la distribution en énergie d'un rayonnement transmis (14) par un matériau de calibration $(Cal_j^k)$ lorsque ledit matériau de calibration est disposé entre ladite source d'irradiation (11) et ledit détecteur spectrométrique (16) ;

- la détermination d'un ensemble de paramètres de calibration $(x_1^{j,k,l}, ...., x_P^{j,k,l})$ à partir de chaque spectre de calibration $(Sp(Cal_j^k, l)$, cet ensemble de paramètres formant les coordonnées d'un vecteur de calibration $(V_M(Cal_j^k, l)$, de façon à obtenir une pluralité de vecteurs de calibration $(V_M(Cal_j^k, l)$ correspondant à chaque classe ($C_j$) ;

- au moins un vecteur de projection ($w_i$) étant déterminé en calculant, et en particulier en maximisant, à partir de chaque vecteur de calibration $(V_M(Cal_j^k, l))$, un critère discriminant (*J(w)*), déterminé par une comparaison entre :

    o un premier terme ($\Sigma_{inter}$)représentatif d'une dispersion inter-classes ;
    o un deuxième terme ($\Sigma_{intra}$), représentatif d'une dispersion intra-classe.

2. Procédé selon la revendication 1, dans lequel on dispose d'un nombre prédéterminé (C) de classes de matériaux, l'étape v) consistant à classifier le matériau selon une desdites classes de matériau.

3. Procédé selon la revendication 2, dans lequel l'étape iv) comporte la projection dudit vecteur de paramètres ($V_M$) dans un espace d'arrivée ($\xi'$), les vecteurs de projection formant alors une base ($w_1$ , ... , $w_W$), dite base d'arrivée, dudit espace d'arrivée.

4. Procédé selon la revendication 3, dans lequel le nombre de vecteurs formant ladite base d'arrivée est strictement inférieur au nombre (C) de classes de matériaux.

5. Procédé selon l'une quelconque des revendications précédentes, dans lequel le spectre de transmission (Sp) est normalisé, terme à terme, par un spectre ($Sp_0$) du rayonnement incident, ce dernier étant représentatif de la distribution en énergie dudit rayonnement incident.

6. Procédé selon l'une quelconque des revendications précédentes, dans lequel le nombre de paramètres (P) est inférieur au nombre de canaux divisé par 2 (N/2).

7. Procédé selon l'une quelconque des revendications précédentes, dans lequel, le spectre de transmission (Sp) étant défini sur une pluralité de canaux, au moins un paramètre ($x_p$ ) comporte :

    - une référence du canal du spectre de transmission comportant le nombre maximal de photons détectés ;
    - ou un ratio entre les contenus de deux canaux différents ;
    - ou un taux de variation entre les contenus de deux canaux différents ;

8. Procédé selon l'une quelconque des revendications précédentes, dans lequel au moins un vecteur de projection ($w_i$) est obtenu en déterminant, à partir de chaque vecteur de calibration $(V_M(Cal_j^k, l))$,

    - une première matrice ($\Sigma_{inter}$)représentative d'une dispersion inter-classes,
    - une deuxième matrice ($\Sigma_{intra}$), représentative d'une dispersion intra-classe,
    - une troisième matrice ($\Sigma$), formée par un produit matriciel d'une matrice inverse de ladite deuxième matrice par ladite première matrice,

ledit vecteur de projection étant un vecteur propre de ladite troisième matrice.

**9.** Procédé selon l'une quelconque des revendications précédentes, dans lequel chaque vecteur de projection ($w_i$) est déterminé par analyse discriminante linéaire, en considérant chaque vecteur de calibration $(V_M(Cal_j^k, l))$.

**10.** Dispositif de caractérisation du matériau contenu dans un échantillon (10) comprenant :

- une source d'irradiation (11), apte à émettre un rayonnement électromagnétique ionisant, dit rayonnement incident (12), vers ledit échantillon (10),
- un détecteur spectrométrique (16), apte à détecter un rayonnement transmis (14) par l'échantillon (10) lorsque l'échantillon (10), exposé audit rayonnement incident (12), est interposé entre la source d'irradiation et le détecteur spectrométrique,
- le dispositif étant **caractérisé en ce qu'**il comporte un processeur (20), apte à recevoir des données mesurées par le détecteur spectrométrique et configuré pour mettre en oeuvre les étapes de traitement de données du procédé objet de l'une quelconque des revendications 1 à 9, le processeur étant relié à une mémoire (22) dans laquelle est stockée au moins un vecteur de projection ($w_1$ , ... . , $w_W$).

**11.** Support d'enregistrement d'informations, comportant des instructions pour l'exécution des étapes de traitement de données d'un procédé selon l'une quelconque des revendications 1 à 9, ces instructions étant aptes à être exécutées par un processeur (20).

**Patentansprüche**

**1.** Verfahren zur Klassifizierung eines Materials, welches die folgenden Schritte umfasst:

i) Bestrahlung einer Probe (10), die das Material enthält, mithilfe einer ionisierenden elektromagnetischen Strahlung (12), einfallende Strahlung genannt, die von einer Strahlungsquelle (11) erzeugt wird;

ii) Detektion einer von der Probe übertragenen Strahlung (14) mithilfe eines spektrometrischen Detektors (16), wobei die Probe (10) zwischen der Strahlungsquelle (11) und dem spektrometrischen Detektor (16) angeordnet ist, und Erfassung eines Spektrums (Sp) der so detektierten Strahlung, Übertragungsspektrum genannt, das für die Energieverteilung der übertragenen Strahlung (14) repräsentativ ist, wobei das Spektrum eine Anzahl von Kanälen (N) aufweist und eine Menge von detektierten Photonen pro Kanal darstellt, wobei jeder Kanal einem Energiebereich entspricht;

iii) Bestimmung einer Menge von Parametern ($x_1,...,x_p$) aus dem Übertragungsspektrum (Sp), wobei diese Menge von Parametern die Koordinaten eines Parametervektors ($V_M$), der das Übertragungsspektrum (Sp) repräsentiert, in einem Ausgangsraum ($\xi$) bildet, wobei die Anzahl von Parametern (P) der Menge von Parametern streng kleiner als die Anzahl von Kanälen (N) des Übertragungsspektrums ist;

iv) Projektion des Parametervektors ($V_M$) gemäß wenigstens einem Projektionsvektor ($w_1,...,w_W$), um wenigstens ein projiziertes Datenelement ($y_1,...,y_W$) zu erhalten, wobei jedes projizierte Datenelement aus der Projektion des Parametervektors ($V_M$) gemäß einem Projektionsvektor resultiert;

v) Klassifizierung eines Materials in Abhängigkeit von jedem projizierten Datenelement ($y_1,..., y_W$), wobei das Verfahren **dadurch gekennzeichnet ist, dass** jeder Projektionsvektor (wi) im Verlauf einer Lernphase bestimmt wird, die mithilfe von Kalibrationsmaterialien $(Cal_j^k)$ durchgeführt wird, deren Natur (j) bekannt ist, wobei die Kalibrationsmaterialien wenigstens zwei verschiedene Klassen ($C_j$) von Materialien definieren, wobei die Lernphase umfasst:

- die Gewinnung von Kalibrationsspektren $(\mathrm{Sp}(Cal_j^k, l))$ , wobei jedes Kalibrationsspektrum für die Energieverteilung einer von einem Kalibrationsmaterial $(Cal_j^k)$ übertragenen Strahlung (14), wenn dieses Kalibrationsmaterial zwischen der Strahlungsquelle (11) und dem spektrometrischen Detektor (16) angeordnet ist, repräsentativ ist;

- die Bestimmung einer Menge von Kalibrationsparametern $(x_1^{j,k,l},...,x_p^{j,k,l})$ aus jedem Kalibrationsspektrum $(\mathrm{Sp}(Cal_j^k, l))$ , wobei diese Menge von Parametern die Koordinaten eines Kalibrationsvektors $(V_M(Cal_j^k, l))$ bildet, um eine Vielzahl von Kalibrationsvektoren $(V_M(Cal_j^k, l))$ zu erhalten, die jeweils einer Klasse (Cj) entsprechen;
- wobei wenigstens ein Projektionsvektor (wi) bestimmt wird, indem aus jedem Kalibrationsvektor $(V_M(Cal_j^k, l))$ ein Unterscheidungskriterium (J(w)) berechnet wird, und insbesondere maximiert wird, das durch einen Vergleich bestimmt wird zwischen:

○ einem ersten Term ($\Sigma_{inter}$), der für eine Interklassenstreuung repräsentativ ist;
○ einem zweiten Term ($\Sigma_{intra}$), der für eine Intraklassenstreuung repräsentativ ist.

2. Verfahren nach Anspruch 1, wobei man über eine vorbestimmte Anzahl (C) von Klassen von Materialien verfügt, wobei Schritt v) darin besteht, das Material gemäß einer dieser Materialklassen zu klassifizieren.

3. Verfahren nach Anspruch 2, wobei Schritt iv) die Projektion des Parametervektors ($V_M$) in einen Ankunftsraum ($\xi'$) umfasst, wobei die Projektionsvektoren dann eine Basis ($w_1$,..., $w_W$), Ankunftsbasis genannt, dieses Ankunftsraums bilden.

4. Verfahren nach Anspruch 3, wobei die Anzahl der Vektoren, welche die Ankunftsbasis bilden, streng kleiner als die Anzahl (C) der Klassen von Materialien ist.

5. Verfahren nach einem der vorhergehenden Ansprüche, wobei das Übertragungsspektrum (Sp) Term für Term durch ein Spektrum ($Sp_0$) der einfallenden Strahlung normiert wird, wobei dieses Letztere für die Energieverteilung der einfallenden Strahlung repräsentativ ist.

6. Verfahren nach einem der vorhergehenden Ansprüche, wobei die Anzahl der Parameter (P) kleiner als die durch 2 dividierte Anzahl der Kanäle (N/2) ist.

7. Verfahren nach einem der vorhergehenden Ansprüche, wobei, wenn das Übertragungsspektrum (Sp) auf einer Vielzahl von Kanälen definiert ist, wenigstens ein Parameter ($x_p$) enthält:

- eine Angabe des Kanals des Übertragungsspektrums, der die maximale Anzahl detektierter Photonen aufweist;
- oder ein Verhältnis zwischen den Inhalten von zwei verschiedenen Kanälen;
- oder eine Änderungsrate zwischen den Inhalten von zwei verschiedenen Kanälen.

8. Verfahren nach einem der vorhergehenden Ansprüche, wobei wenigstens ein Projektionsvektor (wi) erhalten wird, indem aus jedem Kalibrationsvektor $(V_M(Cal_j^k, l))$ bestimmt werden:

- eine erste Matrix ($\Sigma_{inter}$), die für eine Interklassenstreuung repräsentativ ist,
- eine zweite Matrix ($\Sigma_{intra}$), die für eine Intraklassenstreuung repräsentativ ist,
- eine dritte Matrix ($\Sigma$), die von einem Matrixprodukt einer inversen Matrix der zweiten Matrix mit der ersten Matrix gebildet wird,

wobei der Projektionsvektor ein Eigenvektor der dritten Matrix ist.

9. Verfahren nach einem der vorhergehenden Ansprüche, wobei jeder Projektionsvektor (wi) durch lineare Diskriminanzanalyse bestimmt wird, indem jeder Kalibrationsvektor $(V_M(Cal_j^k, l))$ betrachtet wird.

10. Vorrichtung zur Charakterisierung des in einer Probe (10) enthaltenen Materials, welche umfasst:

- eine Strahlungsquelle (11), die geeignet ist, eine ionisierende elektromagnetische Strahlung (12), einfallende Strahlung genannt, in Richtung der Probe (10) auszusenden,
- einen spektrometrischen Detektor (16), der geeignet ist, eine von der Probe (10) übertragene Strahlung (14) zu detektieren, wenn die Probe (10), die gegenüber der einfallenden Strahlung (12) exponiert ist, zwischen der Strahlungsquelle und dem spektrometrischen Detektor angeordnet ist,
- wobei die Vorrichtung **dadurch gekennzeichnet ist, dass** sie einen Prozessor (20) aufweist, der geeignet ist, Daten zu empfangen, die von dem spektrometrischen Detektor gemessen wurden, und der dafür ausgelegt ist, die Schritte der Datenverarbeitung des Verfahrens durchzuführen, das Gegenstand eines der Ansprüche 1 bis 9 ist, wobei der Prozessor mit einem Speicher (22) verbunden ist, in welchem wenigstens ein Projektionsvektor ($w_1$,...,$w_W$) gespeichert wird.

**11.** Informationsaufzeichnungsmedium, welches Anweisungen zur Ausführung der Schritte der Datenverarbeitung eines Verfahrens nach einem der Ansprüche 1 bis 9 umfasst, wobei diese Anweisungen von einem Prozessor (20) ausführbar sind.

**Claims**

**1.** Method for classifying a material, comprising the following steps:

i) irradiating a sample (10) comprising said material using electromagnetic ionizing radiation (12), called the incident radiation, produced by a radiation source (11);

ii) detecting radiation (14) transmitted by the sample using a spectrometric detector (16), said sample (10) being placed between said radiation source (11) and said spectrometric detector (16), and acquiring a spectrum (Sp) of the radiation thus detected, called the transmission spectrum, representative of the energy distribution of said transmitted radiation (14), the spectrum comprising a number (N) of channels, and representing a quantity of photons detected per channel, each channel corresponding to one energy range;

iii) determining a set of parameters ($x_1$, ..., $x_p$) from the transmission spectrum (Sp), this set of parameters forming the coordinates of a vector ($V_M$) of parameters, representing said transmission spectrum (Sp), in a start space ($\xi$), the number (P) of parameters of the set of parameters being strictly lower than the number (N) of channels of the transmission spectrum;

iv) projecting said vector ($V_M$) of parameters according to at least one projection vector ($w_1$, ...,$w_W$), so as to obtain at least one projected datum ($y_1$, ..., $y_W$), each projected datum resulting from the projection of said vector ($V_M$) of parameters according to a projection vector;

v) classifying the material depending on each projected datum ($y_1$, ...,$y_W$), the method being **characterized in that** each projection vector ($w_i$) is determined in a training phase, carried out using calibration materials $\left(Cal_j^k\right)$ the nature (j) of which is known, said calibration materials defining at least two distinct classes ($C_j$) of materials, said training phase comprising:

- obtaining calibration spectra $\left(Sp\left(Cal_j^k, l\right)\right)$, each calibration spectrum being representative of the energy distribution of radiation (14) transmitted by one calibration material $\left(Cal_j^k\right)$ when said calibration material is placed between said radiation source (11) and said spectrometric detector (16);

- determining a set of calibration parameters $\left(x_1^{j,k,l}, ..., x_p^{j,k,l}\right)$ from each calibration spectrum $\left(Sp\left(Cal_j^k, l\right)\right)$, this set of parameters forming the coordinates of a calibration vector $\left(V_M\left(Cal_j^k, l\right)\right)$, so as to obtain a plurality of calibration vectors $\left(V_M\left(Cal_j^k, l\right)\right)$ corresponding to each class ($C_j$);

- at least one projection vector ($w_i$) being determined by computing, and in particular by maximising, on the basis of each calibration vector $\left(V_M\left(Cal_j^k, l\right)\right)$, a discriminating criterion ($J(w)$), which is determined via a comparison between:

  ∘ a first term ($\Sigma_{inter}$) representative of an inter-class dispersion;
  ∘ a second term ($\Sigma_{intra}$) representative of an intra-class dispersion.

**2.** Method according to Claim 1, wherein provision is made for a predetermined number (C) of classes of materials, step v) consisting in classifying the material into one of said classes of material.

**3.** Method according to Claim 2, wherein step iv) comprises projecting said vector ($V_M$) of parameters into an end space ($\xi'$), the projection vectors then forming a basis ($w_1$, ...,$w_W$), called the end basis, of said end space.

**4.** Method according to Claim 3, wherein the number of vectors forming said end basis is strictly lower than the number (C) of classes of materials.

5. Method according to any one of the preceding claims, wherein the transmission spectrum (Sp) is normalized, term by term, by a spectrum ($Sp_0$) of the incident radiation, said spectrum being representative of the energy distribution of said incident radiation.

6. Method according to any one of the preceding claims, wherein the number (P) of parameters is lower than the number of channels divided by 2 (N/2).

7. Method according to any one of the preceding claims, wherein, the transmission spectrum (Sp) being defined over a plurality of channels, at least one parameter ($x_p$) comprises:

- a reference of the channel of the transmission spectrum comprising the maximum number of detected photons;
- or a ratio between the contents of two different channels;
- or a degree of variation between the contents of two different channels.

8. Method according to any one of the preceding claims, wherein at least one projection vector ($w_i$) is obtained by determining, from each calibration vector $\left(V_M\left(Cal_j^k, l\right)\right)$,

- a first matrix ($\Sigma_{inter}$) representative of an inter-class dispersion,
- a second matrix ($\Sigma_{intra}$) representative of an intra-class dispersion,
- a third matrix ($\Sigma$) formed by a matrix product of multiplication of an inverse matrix of said second matrix by said first matrix,

said projection vector being an eigenvector of said third matrix.

9. Method according to any one of the preceding claims, wherein each projection vector ($w_i$) is determined via linear discriminant analysis, considering each calibration vector $\left(V_M\left(Cal_j^k, l\right)\right)$.

10. Device for characterizing the material contained in a sample (10), comprising:

- a radiation source (11) able to emit ionizing electromagnetic radiation, called incident radiation (12), toward said sample (10),
- a spectrometric detector (16), able to detect radiation (14) transmitted by the sample (10) when the sample (10), exposed to said incident radiation (12), is interposed between the radiation source and the spectrometric detector,
- the device being **characterized in that** it comprises a processor (20) that is able to receive data measured by the spectrometric detector and that is configured to implement the data-processing steps of the method that is the subject matter of any one of claims 1 to 9, the processor being connected to a memory (22) in which is stored at least one projection vector ($w_1,..., w_W$).

11. Data storage medium comprising instructions for executing the data-processing steps of a method according to any one of Claims 1 to 9, these instructions being able to be executed by a processor (20).

1

11

12

10

14

16, 18

24

22    20

**Fig. 1**

**Fig. 2**

$$100' $$

$$Cal_j^k$$

$$200' $$

$$Sp(Cal_j^k, l)$$

$$300' $$

$$(x_1^{j,k,l}, \ldots, x_P^{j,k,l})$$

$$400' $$

$$100 \qquad 200$$

$$Sp$$

$$300$$

$$(x_1, \ldots, x_P)$$

$$w_1, \ldots, w_{C-1}$$

$$400$$

$$(y_1, \ldots, y_{c-1})$$

$$500$$

**Fig. 3**

**Fig. 4**

**Fig. 5**

**Fig. 6**

**Fig. 7**

**Fig. 8**

## RÉFÉRENCES CITÉES DANS LA DESCRIPTION

**Documents brevets cités dans la description**

- EP 2510338 A
- WO 2015091083 A
- FR 1555438

**Littérature non-brevet citée dans la description**

- **WANG XIAOLAN et al.** Material séparation in x-ray CT with energy resolved photon-counting detectors. *MEDICAL PHYSICS,* 24 Février 2011, vol. 38 (3), 1534-1546
- **ALESSIO ADAM M et al.** Quantitative material characterization from multi-energy photon counting CT. *MEDICAL PHYSICS,* 28 Février 2013, vol. 40 (3), 31108-31108